# EUROPÄISCHE PATENTSCHRIFT

(11) **EP 2 071 156 B1**
(45) Veröffentlichungstag und Bekanntmachung des Hinweises auf die Patenterteilung: **06.11.2013**
(21) Anmeldenummer: 08169482.0
(22) Anmeldetag: 20.11.2008
(51) Int. Cl.: F02C 7/22, F02C 9/34, F23R 3/34

(54) **Brennstoffverteilungssystem für eine Gasturbine mit mehrstufiger Brenneranordnung**
Fuel distribution system for a gas turbine with multistage burner arrangement
Système de distribution de carburant d'une turbine à gaz avec ensemble brûleur à plusieurs étages

(30) Priorität: 10.12.2007 CH 19182007
(43) Veröffentlichungstag der Anmeldung: 17.06.2009
(73) Patentinhaber: Alstom Technology Ltd, 5400 Baden (CH)
(72) Erfinder: Kreutle, Christian, 5405 Baden-Dättwil (CH); Zajadatz, Martin, 79790 Küssaberg/Dangstetten (DE); Camponovo, Simone, 5400 Baden (CH)

(56) Entgegenhaltungen:
- EP-A- 0 969 192
- EP-A- 1 067 338
- WO-A-2005/010437
- DE-A1- 4 240 222
- GB-A- 2 174 147

## Beschreibung

### Technisches Gebiet

Die vorliegende Erfindung bezieht sich auf das Gebiet der Gasturbinen. Sie betrifft ein Brennstoffverteilungssystem für eine Gasturbine mit mehrstufiger Brenneranordnung gemäss dem Oberbegriff des Anspruchs 1.

### Stand der Technik

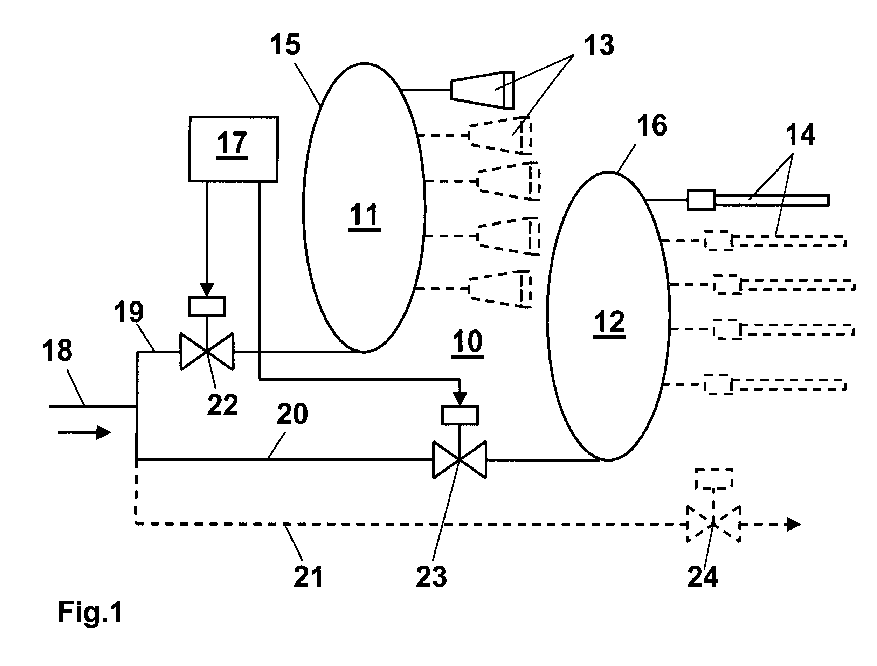

Es ist bekannt (siehe z.B. die WO-A1-2005/093327), bei Gasturbinen mit mehreren gleichzeitig in Betrieb befindlichen Brennerstufen eine Anspeisung der Brennerstufen mit Brennstoff über jeweils zwei oder mehrere geregelte Kontrollventile und Ringleitungen, je nach Anzahl der "Brennerstufungen", zu realisieren. Eine solche Anordnung ist in stark vereinfachter Form beispielhaft in Fig. 1 wiedergegeben. Das Brennstoffverteilungssystem 10 der Fig. 1 umfasst mehrere Brennerstufen, von denen die beiden ersten Brennerstufen 11 und 12 explizit dargestellt sind. Jede der Brennerstufen umfasst einen oder mehrere Brenner 13 bzw. 14, die an eine gemeinsame Brennstoffringleitung 15 bzw. 16 angeschlossen sind. Jede der Brennstoffringleitungen 15, 16 ist über eine Verteilleitung 19, 20, 21 an eine gemeinsame Brennstoffzuführung 18 angeschlossen, über die der Brennstoff für das gesamte Brennersystem herangeführt wird. In den Verteilleitungen 19, 20, 21 sind jeweils Kontrollventile 22, 23, 24 angeordnet, die an eine Steuerung 17 angeschlossen sind, und von der Steuerung 17 gesteuert bzw. geregelt werden.

Je nach Betriebspunkt wird über die Kontrollventile 22, 23, 24 der benötigte Brennstoffmassenstrom für die jeweilige Brennerstufe 11, 12 eingestellt. Hierbei wird normalerweise eine Brennstoffeinspeisungsstufe bei niedriger Last und beim Start der Gasturbine so ausgelegt, dass lokal im Brennerströmungsfeld brennstoffreiche Zonen eingestellt werden, die ein breites Betriebsfeld des Brenners gewährleisten. Im höheren Lastbereich wird diese Brennstoffeinspeisung deutlich reduziert, um niedrige Emissionswerte zu realisieren (siehe: EP-B1-0 704 657 und WO-A1-01/96785).

In DE 42 40 222 A1 ist ein Gasturbinenbrenner für ein Gasturbinenkraftwerk beschrieben, mit einem Flammrohr, welches mit einer Turbine in Verbindung steht. Der Betrieb dieses Flammrohres wird, ausgehend von einer Brennstoffzufuhrleitung, über eine Anzahl von einer Hauptbrennstoffleitung abgezweigter Brennstoffleitungen aufrechterhalten, welche Leitungen jeweils eine Reihe von Regelorganen enthalten. Diese Brennstoffleitungen stellen beim Betrieb des Flammrohres verschiedene Brennstoffgemischqualitäten zur Verfügung, welche innerhalb des Flammrohres verschiedentlich zum Einsatz kommen. In dieser Druckschrift ist aber festzustellen, dass eine mehrstufige Verbrennung nicht vorgegeben ist, und dass die Hauptbrennstoffleitung keine Aufspaltung erfährt, um verschiedene nachgeschaltete Brennerstufen zu versorgen.

Aus WO 2005//010437 geht ein Verfahren zur Reduktion von NOx-Emissionen beim Betrieb von mehreren Brennern einer Gasturbine hervor. Eine wirkungsvolle Verringerung der Emissionen wird dadurch erreicht, dass zu einem vorgegebenen Zeitpunkt direkt oder indirekt die Flammentemperaturen oder Differenzen zwischen den Flammentemperaturen einzelner Brenner oder Brennergruppen gemessen werden, und dass die Brennstoffzufuhr selektiv bei denjenigen Brennern oder Brennergruppen gedrosselt wird, deren Flammentemperatur einen vorgegebenen Wert überschreitet. Eine mehrstufige Verbrennung ist nicht Bestandteil dieser Druckschrift.

Aus GB 2 174 147 A geht eine Brennstoffversorgung einer Brennkammer hervor, mit einer zweifachen Brennstoffzuführung. Die einzelnen Brennstoffstränge sind mit einer Reihe von Bypassen, Ventilen und Blenden versehen, welche den finalen Zweck haben, einen gestuften Betrieb der einzigen Brennkammer zu bewerkstelligen. Eine mehrstufige Brenneranordnung geht aus dieser Druckschrift nicht hervor. Ein Kontrollventil in der ersten Verteilleitung zu der ersten Brennerstufe geht aus dieser Druckschrift ebenfalls nicht hervor.

Die für den niederen Lastbereich eingestellte Brennstoffeinspeisung soll hierbei vorzugsweise den höheren Druckverlust bezüglich der Brennstoffeinspeisung aufweisen, damit im Volllastbetrieb bei niedrigen Durchsätzen eine ausreichende Brennstoffverteilung über die Brenner gewährleistet werden kann. Andererseits muss bei der Zündung und beim Starten der Gasturbine ein ausreichend kleiner Brennstoffmassenstrom eingestellt werden, um ein Überfeuern der Turbine zu vermeiden. Da gleichzeitig eine Mehrzahl von Kontrollventilen eingestellt und geregelt werden muss, kann es zu Instabilitäten im Regelverhalten der Brennstoffeinspeisung kommen, die zu erhöhtem Schadstoffausstoss und Pulsationen in der Brennkammer führen können.

### Darstellung der Erfindung

Es ist daher Aufgabe der Erfindung, ein Brennstoffverteilsystem für Gasturbinen zu schaffen, welches die Nachteile bekannter Brennstoffverteilsysteme vermeidet und sich insbesondere durch die Möglichkeit für ein vereinfachtes Regelungsverfahren und einen schadstoffarmen und pulsationsfreien Betrieb auszeichnet.

Die Aufgabe wird durch die Gesamtheit der Merkmale des Anspruchs 1 gelöst.

Die Erfindung zeichnet sich dadurch aus, dass nur in der Verteilleitung zur primären Brennerstufe ein Kontrollventil angeordnet ist. Hierdurch lässt sich eine besonders einfache Regelung erzielen.

Gemäss einer anderen Ausgestaltung der Erfindung sind die Blenden in den Verteilleitungen so gewählt, dass sich die jeweiligen Brennstoffanteile der einzelnen Brennerstufen auf ein für den Lastbereich der Gasturbine günstiges Brennstoffverhältnis einstellen.

Bevorzugt werden das Kontrollventil bzw. die Kontrollventile von einer Steuerung gesteuert.

Eine weitere Ausgestaltung der Erfindung ist dadurch gekennzeichnet, dass die Brenner der einzelnen Brennstufen jeweils an eine gemeinsame Brennstoffringleitung angeschlossen sind, und dass die Brennstoffringleitungen jeweils über eine der Verteilleitungen mit der gemeinsamen Brennstoffzuführung verbunden sind.

### Kurze Erläuterung der Zeichnung

Die Erfindung soll nachfolgend anhand von Ausführungsbeispielen im Zusammenhang mit der Zeichnung näher erläutert werden. Es zeigen
- Fig. 1: ein stark vereinfachtes Schema eines Brennstoffverteilsystems mit Kontrollventilen in allen Verteilleitungen, wie es aus dem Stand der Technik bekannt ist; und
- Fig. 2: in einer zu Fig. 1 vergleichbaren Darstellung ein Brennstoffverteilsystem gemäss einem bevorzugten Ausführungsbeispiel der Erfindung.

### Wege zur Ausführung der Erfindung

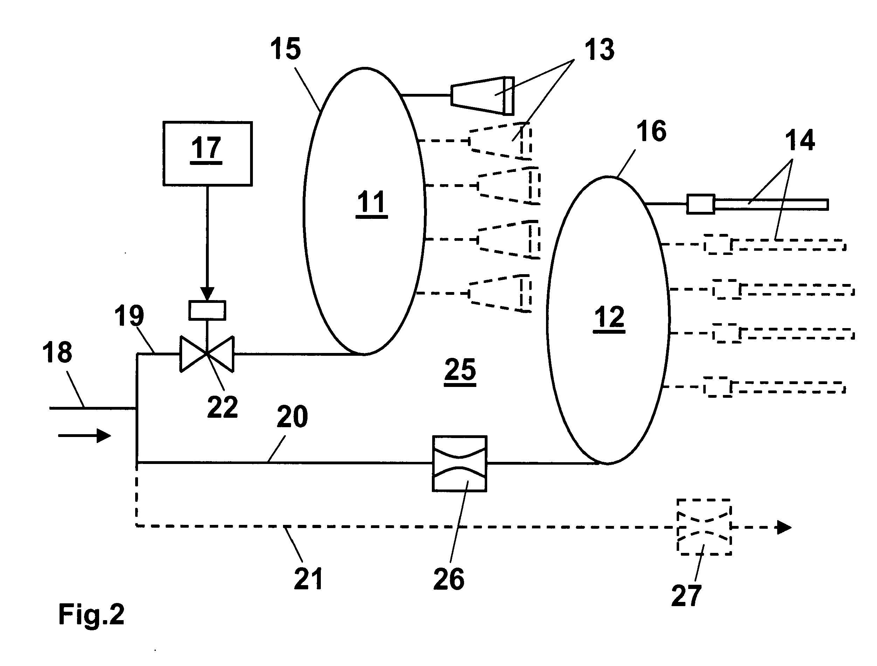

In Fig. 2 ist in einer zu Fig. 1 vergleichbaren Darstellung ein Brennstoffverteilsystem gemäss einem bevorzugten Ausführungsbeispiel der Erfindung wiedergegeben. Auch das Brennstoffverteilsystem 25 der Fig. 2 umfasst mehrere Brennerstufen, von denen die beiden ersten Brennerstufen 11 und 12 explizit dargestellt sind. Jede der Brennerstufen umfasst einen oder mehrere Brenner 13 bzw. 14, die an eine gemeinsame Brennstoffringleitung 15 bzw. 16 angeschlossen sind. Die Brenner 13 der ersten Stufe können dabei insbesondere sogenannte Doppelkegelbrenner sein, wie sie beispielsweise aus der EP-A2-1 645 802 (siehe z.B. die dortige Fig. 1) bekannt sind. Die Brenner 14 der zweiten Stufe können - wie in der EP-A2-1 645 802 gezeigt - als Brennstofflanzen ausgebildet und konzentrisch in den Doppelkegelbrennern angeordnet sein. Jede der Brennstoffringleitungen 15, 16 ist über eine Verteilleitung 19, 20, 21 an eine gemeinsame Brennstoffzuführung 18 angeschlossen, über die der Brennstoff für das gesamte Brennersystem herangeführt wird. In den Verteilleitungen 19, 20, 21 sind nun unterschiedliche Elemente 22, 26, 27 zur gezielten Beeinflussung des Brennstoffmassenstroms angeordnet. In der Verteilleitung 19 der ersten Stufe ist als Element zur gezielten Beeinflussung des Brennstoffmassenstroms wiederum ein Kontrollventil 22 eingesetzt, das von einer Steuerung 17 gesteuert bzw. geregelt wird. In den übrigen Verteilleitungen 20, 21 der weiteren Stufen sind dagegen passive Elemente zur gezielten Beeinflussung des Brennstoffmassenstroms eingesetzt, nämlich fest vorgegebene Blenden 26, 27. Bei der vorliegenden Erfindung gemäss Fig. 2 wird also, verglichen mit der herkömmlichen Lösung, nur ein Kontrollventil 22 zur Einstellung des Brennstoffmassenstroms für die Primärstufe benutzt. Die Einstellung der Massenströme für die einzelnen Brennerstufungen wird über fest installierte Blenden 26, 27 realisiert.

Entgegen der herkömmlichen Lösung muss hier nur noch der Brennstoffmassenstrom für die primäre Brennerstufe 11 geregelt werden, während sich die Massenströme der anderen Brennerstufe(n) 12 über den Vordruck und den Druckverlust über die Blenden 26, 27 in den sekundären Stufen ergeben. Daraus resultiert ein erheblich vereinfachtes Betriebskonzept der Anlage. Die jeweiligen Brennstoffanteile der einzelnen Stufen sollten sich, bei richtig dimensionierten Blenden 26, 27, auf ein für den Lastbereich günstiges Brennstoffverhältnis einstellen. Hierbei muss allerdings der Brenner im Hinblick auf Brennstoffstufungen ausgelegt sein.

Durch die Einsparung eines Regelventils werden allfällige Instabilitäten im Regelverhalten der Brennstoffeinspeisung reduziert, da hier nur noch das Hauptventil 22 angesteuert werden muss und die anderen Massenströme sich automatisch anhand des Strömungswiderstandes, verursacht durch die Blende(n) 26, 27, einstellen.

Dies bringt auch gewisse Vorteile bei einem plötzlichen Lastabwurf der Gasturbine. So kann hier signifikant schneller der Brennstoffmassenstrom kontrolliert reduziert werden, ohne dabei auf evtl. Regelventilschwankungen und Brennstoffstufungen für die einzelnen Betriebspunkte reagieren zu müssen, da sich diese automatisch einstellen.

Mit der Erfindung lassen sich die folgenden charakteristischen Eigenschaften und Vorteile verbinden:
- Vereinfachtes Regelungsverfahren und Brennstoffversorgungssystem für eine Gasturbine im Öl- und Gasbetrieb.
- Anwendung für Gasturbinenbrenner mit gleichzeitig mehr als einer Brennstoffstufe in Betrieb.
- Schadstoffarmer und pulsationsfreier Betrieb bei der Verbrennung von flüssigen und gasförmigen Brennstoffen in einer Gasturbinenbrennkammer.
- Anwendung auf nasse und trockene Ölverbrennung.
- Kontrolle der CO- und NOx-Emissionen im gesamten Lastbereich.
- Anwendung für Ring-, Topfbüchsen-, Silo- und Rohrbrennkammern mit Einzel- bzw. Mehrfachbrenneranordnungen.

### Bezugszeichenliste

- 10,25: Brennstoffverteilungssystem
- 11,12: Brennerstufe
- 13,14: Brenner
- 15,16: Brennstoffringleitung
- 17: Steuerung
- 18: Brennstoffzuführung
- 19,20,21: Verteilleitung
- 22,23,24: Kontrollventil
- 26,27: Blende

## Patentansprüche

1. Brennstoffverteilungssystem (25) für eine Gasturbine mit mehrstufiger Brenneranordnung, bei welchem Brennstoffverteilungssystem (10, 25) von einer gemeinsamen Brennstoffzuführung (18) jeweils eine Verteilleitung (19, 20, 21) abzweigt und zu jeder Brennerstufe (11, 12) führt, wobei in jeder Verteilleitung (19, 20, 21) ein einziges Element (22, 26, 27) zur gezielten Beeinflussung des Brennstoffmassenstroms vorgesehen ist, und wobei in der Verteilleitung (19) zur primären Brennerstufe als Element zur gezielten Beeinflussung des Brennstoffmassenstroms ein Kontrollventil (22) angeordnet ist, und in den übrigen Verteilleitungen (20, 21) als Element zur gezielten Beeinflussung des Brennstoffmassenstroms jeweils eine fest vorgegebene Blende (26, 27) angeordnet ist.

2. Brennstoffverteilungssystem nach Anspruch 1, **dadurch gekennzeichnet, dass** die Blenden (26, 27) in den Verteilleitungen zu den einzelnen Brennerstufen (11, 12) auf den jeweiligen Lastbereich der Gasturbine einstellbar sind.

3. Brennstoffverteilungssystem nach einem der Ansprüche 1 bis 2, **dadurch gekennzeichnet, dass** das Kontrollventil (22) von einer Steuerung (17) gesteuert wird.

4. Brennstoffverteilungssystem nach einem der Ansprüche 1 bis 3, **dadurch gekennzeichnet, dass** die Brenner (13, 14) der einzelnen Brennstufen (11, 12) jeweils an eine gemeinsame Brennstoffringleitung (15, 16) angeschlossen sind, und dass die Brennstoffringleitungen (15, 16) jeweils über eine der Verteilleitungen (19, 20, 21) mit der gemeinsamen Brennstoffzuführung (18) verbunden sind.

## Claims

1. Fuel distribution system (25) for a gas turbine with multistage burner arrangement, in which fuel distribution system (10, 25) one distribution line (19, 20, 21) branches off in each case from a common fuel feed line (18) and is led to each burner stage (11, 12), wherein a single element (22, 26, 27) for the specific influencing of the fuel mass flow is provided in each distribution line (19, 20, 21), and wherein a control valve (22) is arranged in the distribution line (19) to the primary burner stage as an element for the specific influencing of the fuel mass flow, and a restrictor (26, 27), which is preset in a fixed manner, is arranged in each case in the remaining distribution lines (20, 21) as an element for the specific influencing of the fuel mass flow.

2. Fuel distribution system according to Claim 1, **characterized in that** the restrictors (26, 27) in the distribution lines to the individual burner stages (11, 12) can be adjusted to the respective load range of the gas turbine.

3. Fuel distribution system according to one of Claims 1 to 2, **characterized in that** the control valve (22) is controlled by a control unit (17).

4. Fuel distribution system according to one of Claims 1 to 3, **characterized in that** the burners (13, 14) of the individual burner stages (11, 12) are connected in each case to a common fuel ring main (15, 16), and **in that** the fuel ring mains (15, 16) are connected in each case via one of the distribution lines (19, 20, 21) to the common fuel feed line (18).

## Revendications

1. Système de distribution de carburant (25) pour une turbine à gaz avec un ensemble de brûleurs à plusieurs étages, dans lequel système de distribution de carburant (10, 25) une conduite de distribution respective (19, 20, 21) part d'une alimentation en carburant commune (18), et conduit à chaque étage de brûleur (11, 12), un élément unique (22, 26, 27) étant prévu dans chaque conduite de distribution (19, 20, 21) pour influencer de manière spécifique le débit massique de carburant et une soupape de contrôle (22) étant disposée dans la conduite de distribution (19) allant à l'étage de brûleur primaire en tant qu'élément servant à influencer de manière spécifique le débit massique de carburant, et un diaphragme prédéfini fixement (26, 27) étant à chaque fois disposé dans les autres conduites de distribution (20, 21) en tant qu'élément pour influencer de manière spécifique le débit massique de carburant.

2. Système de distribution de carburant selon la revendication 1, **caractérisé en ce que** les diaphragmes (26, 27) peuvent être ajustés dans les conduites de distribution allant aux étages de brûleurs individuels (11, 12) à la région de charge respective de la turbine à gaz.

3. Système de distribution de carburant selon l'une quelconque des revendications 1 à 2, **caractérisé en ce que** la soupape de contrôle (22) est commandée par une commande (17).

4. Système de distribution de carburant selon l'une quelconque des revendications 1 à 3, **caractérisé en ce que** les brûleurs (13, 14) des étages de brûleurs individuels (11, 12) sont à chaque fois raccordés à une conduite annulaire de carburant commune (15, 16) et **en ce que** les conduites annulaires de carburant (15, 16) sont connectées à chaque fois par le biais de l'une des conduites de distribution (19, 20, 21) à l'alimentation en carburant commune (18).
